# EUROPÄISCHE PATENTANMELDUNG

(11) **EP 1 468 858 A1**
(43) Veröffentlichungstag der Anmeldung: **20.10.2004**
(21) Anmeldenummer: 04008551.6
(22) Anmeldetag: 08.04.2004
(51) Int. Cl.: B60K 15/04

(54) **Tankverschluss**

(30) Priorität: 16.04.2003 DE 10317851
(71) Anmelder: BLAU Kunststofftechnik Zweigniederlassung der Tesma Europa GmbH, 41516 Grevenbroich (DE)
(72) Erfinder: Malskorn, Ralf, 41469 Neuss (DE); Scharrer, Konrad, 40721 Hilden (DE)
(74) Vertreter: Paul, Dieter-Alfred, Dipl.-Ing.

(57) **Zusammenfassung**

Die Erfindung betrifft einen Tankverschluß (1) bestehend aus einem Tankdeckel (3) und einem elektrisch leitfähigen Tankstutzen (2), wobei der Tankdeckel (3) zu dessen Handhabung ein Griffteil (7) aus elektrisch leitfähigen Material aufweist, das elektrischen Kontakt mit wenigstens einem federnden, ebenfalls elektrisch leitfähigem Kontaktvorsprung (12, 13) hat, der im aufgeschraubten Zustand des Tankdeckels (3) an dem Tankstutzen (2) anliegt, und ist dadurch gekennzeichnet, daß der Kontaktvorsprung bzw. die Kontaktvorsprünge (12, 13) an dem Griffteil (7) angeformt oder eingegossen ist bzw. sind.

## Beschreibung

Die Erfindung betrifft einen Tankverschluß bestehend aus einem Tankdeckel und einem elektrisch leitfähigen Tankstutzen, wobei der Tankdeckel zu dessen Handhabung ein Griffteil aus elektrisch leitfähigem Material aufweist, das elektrischen Kontakt mit wenigstens einem federnden Kontaktvorsprung hat, der im aufgeschraubten Zustand an dem Tankstutzen zwecks Ableitung von statischer Elektrizität anliegt.

Wenn ein Tankdeckel nicht elektrisch leitfähig ist und auch keine elektrische Verbindung zum Tankstutzen hat, besteht das Problem, daß sich der Tankdeckel elektrisch aufladen kann, wenn er von einer Person gehandhabt wird, die mit statischer Elektrizität aufgeladen ist, beispielsweise durch Reibung an Kunststoffsitzen beim Aussteigen. Dies kann zu Funkenbildung und damit zu einer Verpuffung des aus dem Tankstutzen ausströmenden Treibstoffdampfs beim Abnehmen des Tankdeckels führen.

Um dies zu vermeiden, ist es im Stand der Technik bekannt, das Griffteil des Tankverschlusses aus einem elektrisch leitfähigen Material zu fertigen, beispielsweise aus einem mit Kohlenstoff (Graphit) vermischten Kunststoff wie Polyamid, und einen elektrischen Kontakt zwischen Griffteil und Tankstutzen herzustellen, wenn der Tankdeckel auf den Stutzen aufgeschraubt ist. Auf diese Weise wird die von einer Bedienungsperson auf das Griffteil übergeleitete statische Elektrizität auf den Tankstutzen übertragen und an die Karosserie abgeleitet, so daß beim Ausschrauben des Tankdeckels keine Potentialdifferenz mehr zwischen Tankdeckel und Tankstutzen vorhanden ist und demgemäß auch die Gefahr von Funkenbildung verringert wird.

Um den elektrischen Kontakt zwischen Griffteil und Tankstutzen zu bewirken, ist es im Stand der Technik bekannt, einen separaten Kontaktring aus elektrisch leitfähigem Kunststoff im Bereich der Unterkante des Griffteils durch Einklippen anzubringen (EP 1 079 832 A2; EP 0 926 199 A1). Der Kontaktring hat nach innen vorstehende, fahnenartig federnde Kontaktvorsprünge, die beim Aufschrauben des Tankdeckels auf den Tankstutzen in Anlage zu letzterem kommen. Über diese Kontaktvorsprünge wird der elektrische Kontakt zwischen Tankstutzen und Kontaktring bewirkt. Der Kontaktring selbst hat durch seine Befestigung am Griffteil elektrischen Kontakt zu diesem.

Bei den bekannten Lösungen hat sich gezeigt, daß die Ableitung der statischen Elektrizität vom Griffteil auf den Tankstutzen unbefriedigend ist, d.h. daß eine Potentialdifferenz zwischen Tankdeckel und Tankstutzen trotz gegenseitigem elektrischen Kontakt bestehen bleibt. Dies hat offenbar seinen Grund darin, daß sowohl an der Verbindung zwischen Griffteil und Kontaktring als auch im Bereich der Anlage der Kontaktvorsprünge an dem Tankstutzen Übergangswiderstände zu überwinden sind, die einen schnellen und vollständigen Potentialausgleich verhindern.

Der Erfindung liegt die Aufgabe zugrunde, einen Tankverschluß der eingangs genannten Art so auszubilden, daß ein möglichst weitgehender Potentialausgleich zwischen Tankdeckel und Tankstutzen erzielt und damit die Gefahr von Funkenbildung auf ein Minimum reduziert wird.

Diese Aufgabe wird erfindungsgemäß dadurch gelöst, daß der Kontaktvorsprung bzw. die Kontaktvorsprünge vorzugsweise an der Innenseite des Griffteils angeformt oder eingegossen ist bzw. sind. Das Anformen kann durch Angießen, insbesondere Spritzgießen, an das Griffteil geschehen, insbesondere dann, wenn Kontaktvorsprung und Griffteil aus elektrisch leitfähigem Kunststoff bestehen.

Grundgedanke der Erfindung ist es demnach, für den elektrischen Kontakt von Griffteil und Tankstutzen nicht einen separaten Übertragungsring mit Kontaktvorsprüngen vorzusehen, sondern die Kontaktvorsprünge direkt an dem Griffteil anzubringen, und zwar durch Anformen oder Eingießen, so daß eine innige Verbindung zwischen Kontaktvorsprung und Griffteil unter Vermeidung eines Übergangswiderstandes erzeugt wird. Es hat sich gezeigt, daß hierdurch ein wesentlich besserer und schnellerer Potentialausgleich zwischen Griffteil und Tankstutzen erzielt und damit die Sicherheit vor Funkenbildung erhöht wird. Außerdem ist die Herstellung des erfindungsgemäßen Tankdekkels wesentlich einfacher und materialsparender, so daß die Herstellungskosten nicht unerheblich verringert werden.

Nach der Erfindung ist weiterhin vorgeschlagen, daß der Kontaktvorsprung bzw. die Kontaktvorsprünge blattfederartig ausgebildet ist bzw. sind und radial schräg nach innen vorsteht bzw. vorstehen. Durch entsprechende Anpassung an die Formgebung des Tankstutzens kann erreicht werden, daß der jeweilige Kontaktvorsprung unter ausreichender Vorspannung an dem Tankstutzen anliegt und demgemäß der Übergangswiderstand gering ist. Dabei ist es besonders vorteilhaft, wenn der Kontaktvorsprung bzw. die Kontaktvorsprünge in einer Umfangsrichtung gesehen beginnend an der Innenseite des Griffteils radial schräg nach innen nach Art einer Rampe vorstehen. Auf diese Weise lassen sich hohe Anlagekräfte verwirklichen, ohne daß hierdurch das Ein- oder Ausschrauben des Tankdeckels wesentlich erschwert wird. Dabei sollte die Unterseite des Kontaktvorsprungs bzw. der Kontaktvorsprünge zum freien Ende hin hochgezogen und angeschrägt sein, da hierdurch das Aufsetzen der Kontaktvorsprünge auf die Stirnseite des Tankstutzens und damit das Verschwenken der Kontaktvorsprünge radial nach außen begünstigt und unterstützt wird.

Nach einem weiteren Merkmal der Erfindung ist vorgesehen, daß die Innenseite des Griffteils im Bereich des Kontaktvorsprungs bzw. der Kontaktvorsprünge solche Ausnehmungen aufweist, daß der jeweilige Kontaktvorsprung bei Bewegung radial nach außen in die Ausnehmung paßt. Damit steht den Kontaktvorsprüngen ein großer Federweg zur Verfügung, was deren Anpassungsfähigkeit an die Formgebung des Tankstutzens begünstigt. Der Kontaktvorsprung bzw. die Kontaktvorsprünge sollten dabei jeweils an einem Rand der Ausnehmung angeformt sein.

Die vorliegende Erfindung ist nicht beschränkt, was die Anzahl der Kontaktvorsprünge betrifft. Als zweckmäßig hat sich die Anordnung von zwei Kontaktvorsprüngen ergeben, die sich diametral gegenüberstehen. Dies schließt nicht aus, daß nur ein Kontaktvorsprung vorgesehen ist oder aber auch mehr als zwei.

In der Zeichnung ist die Erfindung anhand eines Ausführungsbeispiels näher veranschaulicht. Es zeigen:
- Figur 1: einen Vertikalschnitt durch den erfindungsgemäßen Tankverschluß;
- Figur 2: eine Seitenansicht schräg von unten des Griffteils des Tankverschlusses gemäß Figur 1 und
- Figur 3: einen Vertikalschnitt durch das Griffteil gemäß Figur 2.

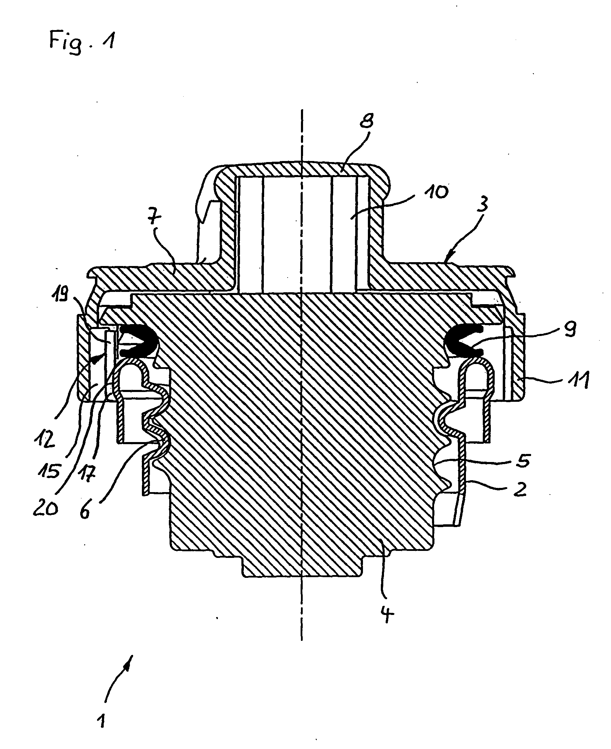

Der in Figur 1 dargestellte Tankverschluß 1 besteht aus dem oberen Ende eines Tankstutzens 2 aus Metall und einem darin eingeschraubten Tankdeckel 3. Der Tankdeckel hat ein Eingriffteil 4, das außenseitig ein Gewinde 5 aufweist, das in ein entsprechendes Gewinde 6 an der Innenseite des Tankstutzens 2 einfaßt. Über das Eingriffteil 4 gestülpt ist ein hutförmiges Griffteil 7 mit einem hochstehenden Griffsteg 8. Im oberen Bereich ist das Eingriffteil 4 von einem Dichtungsring 9 umgeben, der auf der Stirnseite des Tankstutzens 2 abdichtend aufliegt. Die in dem Eingriffteil 4 enthaltenen Teile, wie Überund Unterdruckventil etc., sind nicht explizit dargestellt, da sie nicht zum Gegenstand der vorliegenden Erfindung gehören.

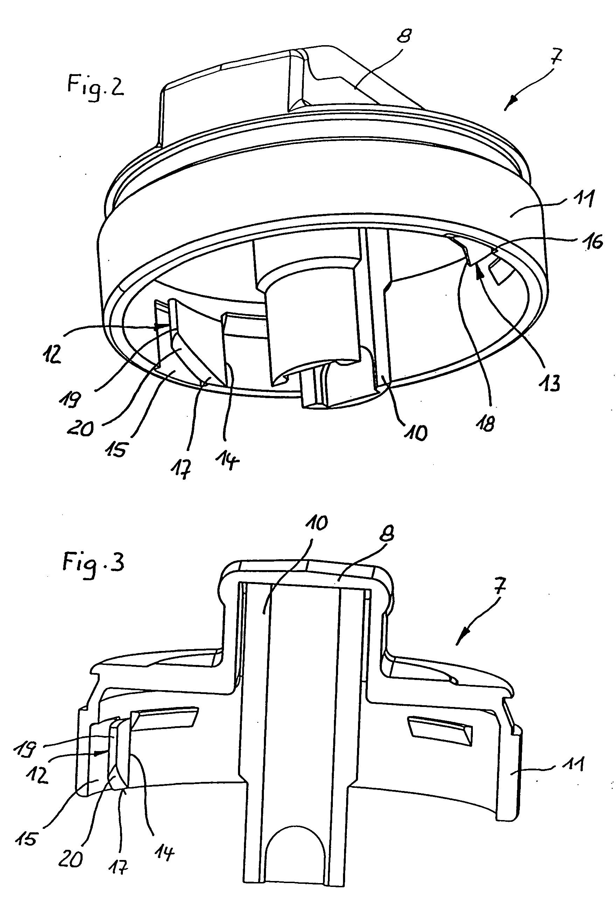

Die Figuren 2 und 3 zeigen lediglich das Griffteil 7 des Tankdeckels 3, wobei mittig ein bis in den Griffsteg 8 reichender Kupplungszylinder 10 vorhanden ist, der für eine drehfeste Verbindung zwischen Griffteil 7 und Eingriffteil 4 sorgt. Das Griffteil 7 besteht aus einem elektrisch leitfähigen Kunststoff, beispielsweise mit Graphitteilchen versetztes Polyamid. An der Innenseite des unteren Zylinderabschnitts 11 des Griffteils 7 sind diametral gegenüberliegend Kontaktvorsprünge 12, 13 angegossen, die ebenfalls aus einem elektrisch leitfähigen Kunststoff bestehen. Die Kontaktvorsprünge 12, 13 sind fahnenartig bzw. blattfederartig ausgebildet und an senkrechten Kanten 14 mit dem Zylinderabschnitt 11 durch Anguß verbunden. Sie stehen von diesen Kanten 14 radial nach innen vor, wobei sie - von oben gegen den Uhrzeigersinn gesehen - Rampen bilden. Die Kontaktvorsprünge 12, 13 sind so flexibel, daß sie radial nach außen ausweichen können. Dabei können sie in Ausnehmungen 15, 16 einschwenken. Die Ausnehmungen 15, 16 sind so ausgebildet, daß sie die Kontaktvorsprünge 12, 13 vollständig aufnehmen können.

Die Unterseiten 17, 18 sind zu den freien Endkanten 19 unter Ausbildung einer Rundung 20 hochgebogen. Gleichzeitig sind die Unterseiten 17, 18 auch in Richtung auf die Innenseiten der Kontaktvorsprünge 12, 13 gerundet. Diese Ausbildung der Unterseiten 17, 18 der Kontaktvorsprünge 12, 13 dient dazu, daß die Kontaktvorsprünge 12, 13 beim Aufschrauben des Tankdeckels 3 möglichst günstig auf den Tankstutzen 2 aufgleiten und dabei die Beanspruchung in senkrechter Richtung gering gehalten wird und daß ein langgestreckter Linienkontakt zwischen Kontaktvorsprung 12, 13 und dem Tankstutzen 2 erhalten wird. Dies minimiert den dortigen elektrischen Übergangswiderstand. Beim Aufschrauben des Tankdeckels 3 auf den Tankstutzen 2 werden die Kontaktvorsprünge 12, 13 radial nach außen gebogen, so daß sie in der Endstellung des Tankdeckels 3 unter vorspannung an dem Tankstutzen 2 anliegen.

## Patentansprüche

1. Tankverschluß (1) bestehend aus einem Tankdeckel (3) und einem elektrisch leitfähigen Tankstutzen (2), wobei der Tankdeckel (3) zu dessen Handhabung ein Griffteil (7) aus elektrisch leitfähigen Material aufweist, das elektrischen Kontakt mit wenigstens einem federnden, ebenfalls elektrisch leitfähigem Kontaktvorsprung (12, 13) hat, der im aufgeschraubten Zustand des Tankdeckels (3) an dem Tankstutzen (2) anliegt, **dadurch gekennzeichnet, daß** der Kontaktvorsprung bzw. die Kontaktvorsprünge (12, 13) an dem Griffteil (7) angeformt oder eingegossen ist bzw. sind.

2. Tankverschluß nach Anspruch 1, **dadurch gekennzeichnet, daß** der Kontaktvorsprung bzw. die Kontaktvorsprünge (12, 13) aus elektrisch leitfähigem Kunststoff besteht bzw. bestehen.

3. Tankverschluß nach Anspruch 1 oder 2, **dadurch gekennzeichnet, daß** das Griffteil (7) aus elektrisch leitfähigem Kunststoff besteht.

4. Tankverschluß nach Anspruch 2 und 3, **dadurch gekennzeichnet, daß** der Kontaktvorsprung bzw. die Kontaktvorsprünge (12, 13) an das Griffteil (7) angegossen sind.

5. Tankverschluß nach einem der Ansprüche 1 bis 4, **dadurch gekennzeichnet, daß** der Kontaktvorsprung bzw. die Kontaktvorsprünge (12, 13) blattfederartig ausgebildet ist bzw. sind und radial schräg nach innen vorstehen.

6. Tankverschluß nach Anspruch 5, **dadurch gekennzeichnet, daß** der Kontaktvorsprung bzw. die Kontaktvorsprünge (12, 13) in einer Umfangsrichtung gesehen beginnend an der Innenseite des Griffteils (7) radial schräg nach innen vorstehen.

7. Tankverschluß nach Anspruch 6, **dadurch gekennzeichnet, daß** die Unterseite (17, 18) des Kontaktvorsprungs bzw. der Kontaktvorsprünge (12, 13) zum freien Ende (19) hin hochgezogen und angeschrägt ist.

8. Tankverschluß nach einem der Ansprüche 5 bis 7, **dadurch gekennzeichnet, daß** die Innenseite des Griffteils (7) im Bereich des Kontaktvorsprungs bzw. der Kontaktvorsprünge (12, 13) solche Ausnehmungen (15, 16) aufweist, daß der jeweilige Kontaktvorsprung (12, 13) bei Bewegung radial nach außen in die Ausnehmung (15, 16) paßt.

9. Tankverschluß nach Anspruch 8, **dadurch gekennzeichnet, daß** der Kontaktvorsprung bzw. die Kontaktvorsprünge (12, 13) jeweils an einem Rand der Ausnehmung (15, 16) angeformt ist bzw. sind.

10. Tankverschluß nach einem der Ansprüche 1 bis 9, **dadurch gekennzeichnet, daß** zwei Kontaktvorsprünge (12, 13) vorgesehen sind, die sich diametral gegenüberstehen.
